# EUROPEAN PATENT APPLICATION

(11) **EP 3 257 972 A2**
(43) Date of publication of application: **20.12.2017**
(21) Application number: 17175968.1
(22) Date of filing: 14.06.2017
(51) Int. Cl.: C25D 5/02, C25D 15/00, C25D 1/00, C25D 1/08, C25D 7/04

(54) **SYSTEMS AND METHODS FOR FORMING METAL MATRIX COMPOSITES**

(30) Priority: 15.06.2016 US 201615183224
(71) Applicant: Lockheed Martin Corporation, Bethesda, Maryland 20817 (US)
(72) Inventor: THOMAS, Jr., William Alfred, Fort Worth, TX 76179 (US)
(74) Representative: Lawrence, John

(57) **Abstract**

In certain embodiments, a method comprises placing nonconductive fibers (210) adjacent to a conductive material (220), immersing the nonconductive fibers (210) and the conductive material (220) in a plating medium (260), and applying a voltage to the conductive material (220) to initiate electroplating. The method further comprises engulfing, by electroplating, the nonconductive fibers (210) in metal to create a metal matrix composite (270).

## Description

### TECHNICAL FIELD

The present disclosure relates in general to forming composites, and more specifically to systems and methods for forming metal matrix composites.

### BACKGROUND

Traditional methods of forming metal matrix composites involve melting the matrix, which exposes the fibers to a reactive metal at 1200 degrees Fahrenheit to 3000 degrees Fahrenheit. Most fibers cannot survive this environment, and many fibers will react to the matrix and form undesirable compounds. Further, cooling the fibers to room temperature can induce thermal strains high enough to destroy the metal matrix composite.

### SUMMARY OF THE DISCLOSURE

In accordance with the present disclosure, disadvantages and problems associated with forming metal matrix composites may be reduced or eliminated.

In one embodiment, a method includes placing nonconductive fibers adjacent to a conductive material, immersing the nonconductive fibers and the conductive material in a plating medium, applying a voltage to the conductive material to initiate electroplating, and engulfing, by electroplating, the nonconductive fibers in metal to create a metal matrix composite.

In some embodiments, a method includes placing nonconductive fibers adjacent to a conductive material, placing a form in the nonconductive fibers, immersing the nonconductive fibers, the conductive material, and the form in a plating medium, and applying a voltage to the conductive material to initiate electroplating. The method further includes engulfing, by electroplating, the nonconductive fibers in metal to create a metal matrix composite and removing the form from the metal matrix composite.

In certain embodiments, a metal matrix composite is formed by placing nonconductive fibers adjacent to a conductive material, immersing the nonconductive fibers and the conductive material in a plating medium, applying a voltage to the conductive material to initiate electroplating, and engulfing, by electroplating, the nonconductive fibers in metal.

Technical advantages of embodiments of the disclosure may include electroplating nonconductive fibers at or within a few degrees of room temperature, which creates a metal matrix composite with virtually no internal stresses and no heat-induced damage or interactions with the fibers. Further, the electroplating process requires no touch labor and relatively low cost facilities, which keeps the processing costs low.

Another advantage of disclosed embodiments of forming metal matrix composites is that they may have a lower coefficient of thermal expansion and a lower density than most conventional metals. Further, disclosed embodiments of metal matrix composites may have improved high temperature properties and damping properties than most conventional metals. For example, a much higher temperature may be possible with disclosed metal matrix composites than with polymer matrix composites. As another technical advantage, in certain embodiments, fugitive forms may be placed in the nonconductive fibers and removed after electroplating to create one or more voids, wherein the voids may be used to construct cooling passages or integral stiffening of the metal matrix composite part. As still another advantage, stiffened metal matrix composite panels may be formed using the electroplating method. Also, the electroplating method may be used to form radii in metal matrix composite parts. In some embodiments, an advantage of forming metal matrix composites using the disclosed electroplating process is that the metal matrix composite may be formed to any desired shape. For example, a metal matrix composite may be formed in the shape of a turbine blade, a rocket engine, a piston, or an air frame part.

A further advantage of some embodiments of forming metal matrix composites with nonconductive fibers is that aerospace parts may be formed that increase performance of the aircraft. For example, embedding fibers (e.g., ceramic fibers) into metal as discussed herein may allow the metal part (e.g., an engine) to operate at higher temperatures than it could without the fibers. The ability of the metal matrix composite to operate at higher temperatures may enable the aircraft to operate at a higher speed without failing in comparison to a part without fibers. For example, an aluminum part without fibers may operate at 350 degrees Fahrenheit, whereas an aluminum metal matrix composite part with fibers, according to certain embodiments, may operate at 700 degrees Fahrenheit. To achieve the 700 degree Fahrenheit temperature without fibers, a titanium or steel part may be required in place of aluminum. Additionally, the metal matrix composite's ability to operate at higher temperatures may enable an aircraft to operate at the same speed but at a lower weight, which may increase the aircraft's performance.

Another advantage of fiber reinforcement in a metal matrix is the reduction of the large property differential found in organic and ceramic matrix advanced composites between the in-plane and out-of-plane directions. The metallic matrix has a substantial percentage of the composite in-plane properties, greatly reducing the risk of out-of-plane failures in complex parts and loading scenarios.

In some embodiments, conductive fibers may be used with a nonconductive coating, which promotes adhesion, producibility, or other properties of the fiber. In certain embodiments, a conductive fiber may be used with electroplating, or any fiber may be used with an electroless plating process, but the preferred process is a nonconductive fiber with an electroplating process.

Other technical advantages will be readily apparent to one skilled in the art from the following figures, descriptions, and claims. Moreover, while specific advantages have been enumerated above, various embodiments may include all, some, or none of the enumerated advantages.

### BRIEF DESCRIPTION OF THE DRAWINGS

For a more complete understanding of the disclosed embodiments and their features and advantages, reference is now made to the following description, taken in conjunction with the accompanying drawings, in which
**FIGURE 1** illustrates a method for forming metal matrix composites, according to certain embodiments;
**FIGURE 2** illustrates a metal matrix composite that may be formed by the method of FIGURE 1, according to certain embodiments;
**FIGURE 3** illustrates a metal matrix composite formed with voids, according to certain embodiments;
**FIGURE 4** illustrates a metal matrix composite formed with radii, according to certain embodiments;
**FIGURE 5** illustrates a metal matrix composite of an assembly, according to certain embodiments; and
**FIGURE 6** illustrates a stiffened metal matrix composite panel, according to certain embodiments.

### DETAILED DESCRIPTION

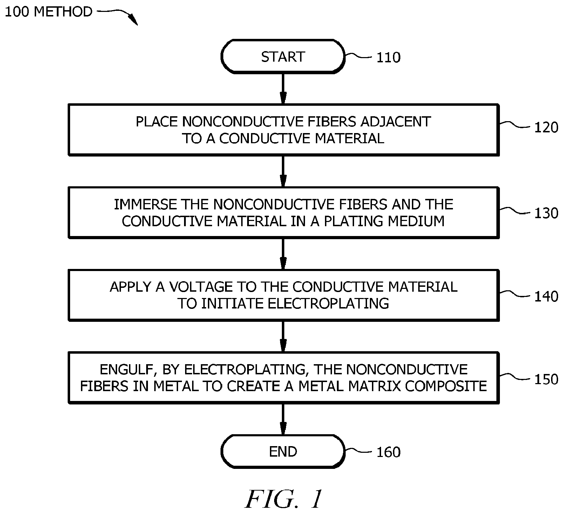

To facilitate a better understanding of the present disclosure, the following examples of certain embodiments are given. The following examples are not to be read to limit or define the scope of the disclosure. Embodiments of the present disclosure and its advantages are best understood by referring to FIGURES 1 through 6, where like numbers are used to indicate like and corresponding parts.

Metal matrix composites exhibit superior characteristics over their polymer or ceramic competitors, such as conductivity, strength, ductility, and fracture toughness. However, processing metal matrix composites presents disadvantages. Current processing methods include melting the metal and infusing the metal into fibers or mixing the fibers with a metal powder and sintering to form a solid composite. Melting the metal and infusing the metal into fibers exposes the fibers to a reactive metal at 1200 degrees Fahrenheit to 3000 degrees Fahrenheit. Most fibers cannot survive this environment, and many fibers will react with the matrix and form undesirable compounds. Further, this process is expensive. Additionally, once a suitable fiber and matrix have been formed in this manner, they must be cooled to or within a few degrees of room temperature. This cooling alone can induce thermal strains high enough to destroy the part. The same general problems also apply to sintering of powders with slightly lower temperatures but much higher pressures.

Composites may be formed by electroplating simple composites. A simple composite usually refers to a particulate composite with randomly placed and oriented reinforcements. An example of a simple composite is concrete, wherein aggregate is randomly tossed into cement for reinforcement. An advanced composite, on the other hand, usually refers to a fibrous composite that has a well-defined location and orientation of the reinforcements. An example of an advanced composite is a fighter wing skin with hundreds of plies of graphite fibers in epoxy, wherein the location and orientation of each fiber and each ply is controlled. While advanced composites may cost more than simple composites, advanced composites do not depend on random orientation or variability of flow orientation to ensure strength in a certain location or direction.

Another example of a simple composite is NIKASIL®. NIKASIL® may be made by tossing small silicon carbide particles into a nickel plating bath such that a layer of silicon carbide/nickel composite forms. While the volume of silicon carbon particles poured into the plating bath may be controlled, the location and orientation of the particles is uncontrolled. Flat plates may be suitable for simple composites. However, complex shapes may result in 'clumping' or 'dry areas'.

To reduce or eliminate these and other problems, some embodiments of the present disclosure include electroplating nonconductive fibers at or within a few degrees of room temperature to create a metal matrix composite with virtually no internal stresses and no heat induced damage or interactions with the fibers. Additionally, the location and orientation of each nonconductive fiber and each ply may be controlled. Nonconductive fibers include, but are not limited to, unidirectional fibers, woven fabrics, and felts. Further, the electroplating process requires no touch labor and relatively low cost facilities, which keeps the processing costs low.

Other technical advantages will be readily apparent to one skilled in the art from the following figures, descriptions, and claims. Moreover, while specific advantages have been enumerated above, various embodiments may include all, some, or none of the enumerated advantages. FIGURES 1-6 provide additional details relating to forming metal matrix composites.

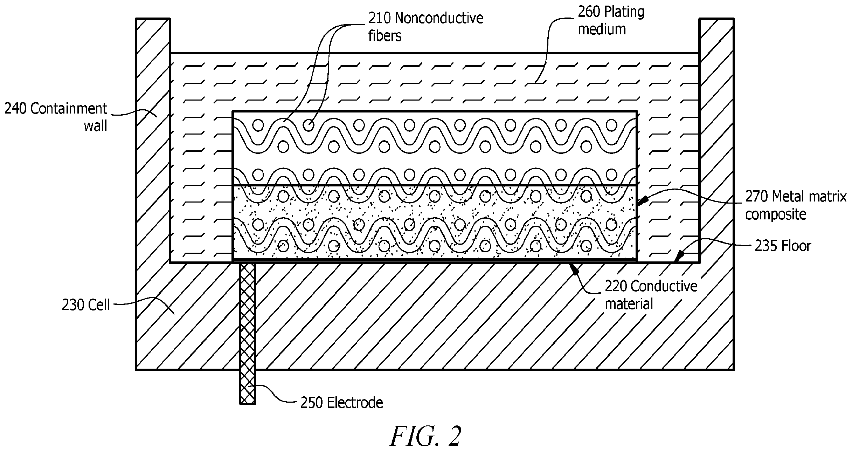

FIGURE 1 illustrates a method 100 for forming metal matrix composites, according to certain embodiments, and FIGURE 2 illustrates a metal matrix composite 270 that may be formed by the method of FIGURE 1, according to certain embodiments.

Method 100 of FIGURE 1 starts at step 110. At step 120, nonconductive fibers are placed adjacent to a conductive material. For example, as illustrated in the embodiment of FIGURE 2, nonconductive fibers 210 may be placed on a conductive material 220. Nonconductive fibers 210 may be any fibers not capable of conducting electricity and are suitable for forming a metal matrix composite. In certain embodiments, nonconductive fibers 210 are ceramic fibers. In some embodiments, nonconductive fibers 210 may be woven (e.g., a woven piece of cloth.) In other embodiments, nonconductive fibers 210 may be straight fibers laid in a stack.

In the illustrated embodiment of FIGURE 2, nonconductive fibers 210 are placed on conductive material 220, wherein conductive material 220 is located on a floor 235 of a cell 230. Cell 230 may be a basic fabrication cell of any size and may include one or more containment walls 240. Floor 235 of cell 230 may be any desired contour. In certain embodiments, floor 235 of cell 230 is shaped to a compound curve and conductive material 220 is applied to match the compound curve. For example, floor 235 of cell 230 may be shaped to the contour of a desired engine part, similar to a mold. In some embodiments, metal matrix composite 270 may be formed using an inner surface of cell 230. For example, several metal matrix composites 270 may be simultaneously processed within cell 230. In certain embodiments, conductive material 220 is paint, wherein the paint is applied to the floor of cell 230. In some embodiments, conductive material 220 is a conductive mat.

As shown in FIGURE 2, cell 230 may include an electrode 250 in contact with conductive material 220. Electrode 250 is any conductor of electricity. In some embodiments, electrode 250 may be embedded in cell 230. In certain embodiments, electrode 250 may not be embedded in cell 230. For example, electrode 250 may be located adjacent to a surface of cell 230 (e.g., floor 235 of cell 230), wherein the surface or a portion of the surface is coated with conductive material 220. As another example, electrode 250 may be suspended above cell 230.

Returning to FIGURE 1, method 100 then proceeds to step 130. At step 130, nonconductive fibers 210 and conductive material 220 are immersed in a plating medium 260, as shown in FIGURE 2. In certain embodiments, plating medium 260 may be any acid-based solution. Plating medium 260 may vary depending on the type of metal to be plated. In certain embodiments, plating medium 260 is poured into cell 230 such that it immerses conductive material 220 and nonconductive fibers 210. In some embodiments, plating medium may be at or near room temperature at the time it is poured into the cell, wherein room temperature ranges from 68 to 77 degrees Fahrenheit.

At step 140 of FIGURE 1, a voltage is applied to conductive material 220 to initiate electroplating. For example, a voltage may be applied to electrode 250 of FIGURE 2 such that a current is introduced through electrode 250 and into conductive material 220. In certain embodiments, applying the voltage initiates plating on the surface of conductive material 220. Applying the voltage to conductive material 220 may increase the temperature of plating medium 260 a few degrees, wherein the temperature increase depends on the amount of current running through plating medium 260. In certain embodiments, the electroplating process forms a metal on the surface of conductive material 220. The surface of conductive material 220 may be flat or contoured.

Method 100 of FIGURE 1 then moves to step 150. At step 150, nonconductive fibers 210 are engulfed, by electroplating, in metal to create a metal matrix composite 270. In certain embodiments, a metal forms on the surface of conductive material 220 and engulfs nonconductive fibers 210 such that nonconductive fibers 210 are embedded into metal matrix composite 270. The plating process engulfs nonconductive fibers 210 as the process advances. In certain embodiments, the plating process may proceed at approximately 0.001 inches per hour.

In certain embodiments, metal matrix composite 270 is created after plating has engulfed all nonconductive fibers 210. Metal matrix composite 270 is then removed from the bath of plating medium 260. In some embodiments, conductive material 220 (e.g., paint) is removed from metal matrix composite 270. Metal matrix composite 270 may then be trimmed. For example, during the plating process different portions of metal matrix composite 270 may grow laterally from conductive material 220, and metal matrix composite 270 may be trimmed to square up the edges of the part. Metal matrix composite 270 may be trimmed to any desired shape. Method 100 of FIGURE 1 ends at step 160.

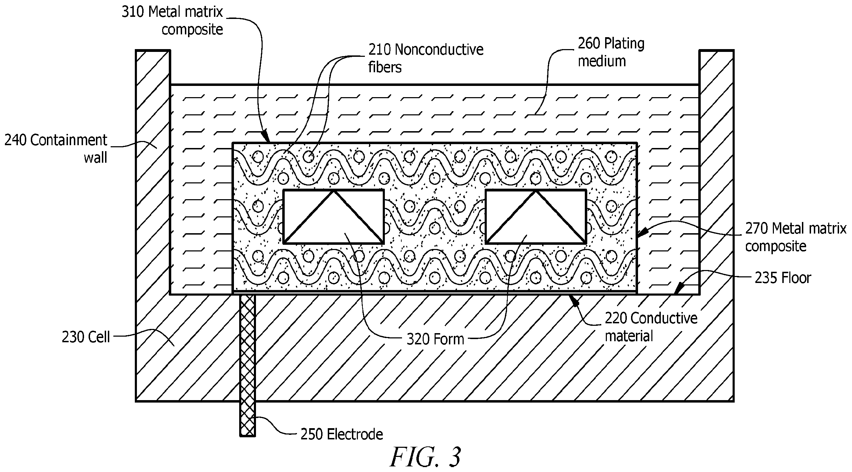

FIGURE 3 illustrates a metal matrix composite 310 formed with voids, according to certain embodiments. Similar to metal matrix composite 270, metal matrix composite 310 of FIGURE 3 is formed by placing nonconductive fibers 210 adjacent to conductive material 220. Additionally, one or more forms 320 may be placed in nonconductive fibers 210. Form 320 may be made of wax, sand, plaster, or any other medium capable of forming a void during the electroplating process. Forms 320 may be placed in nonconductive fibers 210 before or after nonconductive fibers 210 are placed adjacent to conductive material 220. For example, forms 320 may be placed in nonconductive fibers 210 and then nonconductive fibers 210 with forms 320 may be placed on the surface of cell 230, wherein the surface of cell 230 is painted with conductive material 220.

In the illustrated embodiment of FIGURE 3, nonconductive fibers 210, conductive material 220, and forms 320 are immersed in plating medium 260 and a voltage is applied to conductive material 220 via electrode 250 to initiate electroplating. After engulfing, by electroplating, nonconductive fibers 210 in metal to create metal matrix composite 310, forms 320 may be removed from metal matrix composite 310. The removal process may depend on the type of medium used for form 320. For example, where forms 320 are made of wax, plating may engulf nonconductive fibers 210 and wax forms 320, and wax forms 320 may then be removed by heating the wax and pouring the wax out of metal matrix composite 310. Alternatively, a solvent may be used to remove wax forms 320 from metal matrix composite 310. As another example, where forms 320 are made of sand, water may be used to remove the sand from metal matrix composite 310.

After forms 320 are removed, metal matrix composite 310 includes one or more voids. In some embodiments, the voids may be cleaned. Voids may pass partially or completely through metal matrix composite 310. In certain embodiments, voids of metal matrix composite 310 form one or more cooling passages. As an example, the voids of metal matrix composite 310 may form one or more cooling passages of a turbine or rocket engine. In certain embodiments, voids of metal matrix composite 310 form one or more integral stiffening members.

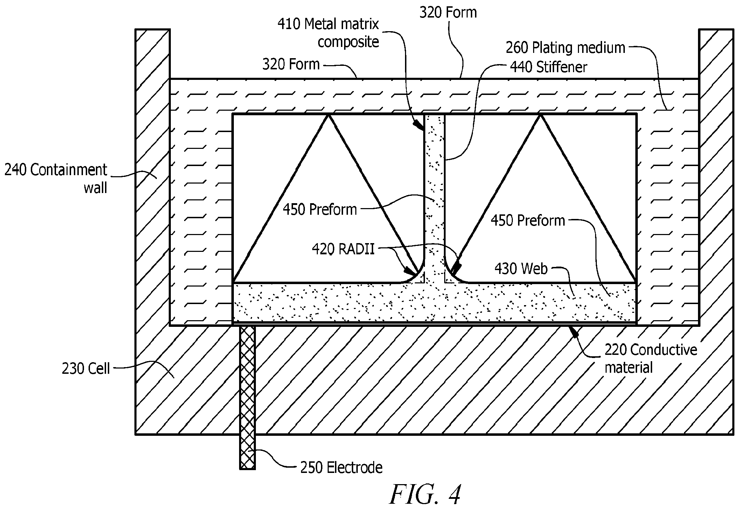

FIGURE 4 illustrates a metal matrix composite 410 formed with radii 420, according to certain embodiments. In the illustrated embodiment of FIGURE 4, metal matrix composite 410 includes two radii 420, a web 430, and a stiffener 440. Some embodiments may include more or less radii 420, webs 430, and stiffeners 440. For example, metal matrix composite may include four radii 420, one web 430, and two stiffeners 440. In the embodiment shown in FIGURE 4, each radius 420 is located between web 430 and stiffener 440.

Metal matrix composite 410 is formed by placing a preform 450 adjacent to conductive material 220 (e.g., paint) in cell 230. Preform 450 is any preform capable of holding nonconductive fibers 210 in position and may be any shape. In certain embodiments, preform 450 allows for an exact, predetermined placement of nonconductive fibers (e.g., nonconductive fibers 210) within a desired shape of metal matrix composite 410. In the illustrated embodiment of FIGURE 4, preform 450 is a woven preform of nonconductive fibers (e.g., nonconductive fibers 210), wherein preform 450 includes a horizontal portion and a vertical portion that takes the shape of an upside down letter "T". Preform 450 and conductive material 220 are then immersed in plating medium 260, and a voltage is applied to conductive material 220 via electrode 250 to initiate electroplating. The plating of preform 450 proceeds until nonconductive fibers 210 of preform 450 reach a desired thickness. In the illustrated embodiment of FIGURE 4, the electroplating process proceeds until the horizontal portion of preform 450 is plated, creating web 430 of metal matrix composite 410.

After web 430 is created, selected surfaces of web 430 may be masked or potted with fugitive material to prevent electroplating of the masked surfaces. For example, forms 320 may be used to mask selected surfaces of web 430. In the illustrated embodiment of FIGURE 4, forms 320 are placed on either side of the vertical portion of preform 450 and on the surface of web 430 to prevent further electroplating of web 430. Also, forms 320 are shaped to create a desired radius 420 on either side of the vertical portion of preform 450. Voltage is then applied to conductive material 220 via electrode 250 to initiate electroplating of the vertical portion of preform 450 and continues until nonconductive fibers 210 of preform 450 are engulfed in metal, creating stiffener 440 of metal matrix composite 410. In certain embodiments, one face of form 320 may be conductive to accelerate the creation of stiffener 440.

Metal matrix composite 410 may then be removed from plating medium 260, and forms 320 and conductive material 220 (e.g., paint) may be removed from metal matrix composite 410. In the illustrated embodiment of FIGURE 4, metal matrix composite 410 is a single member comprising two radii 420, web 430, and stiffener 440. Metal matrix composite may be formed to any desirable shape. As an example, metal matrix composite may be formed in the shape of a wide flange beam.

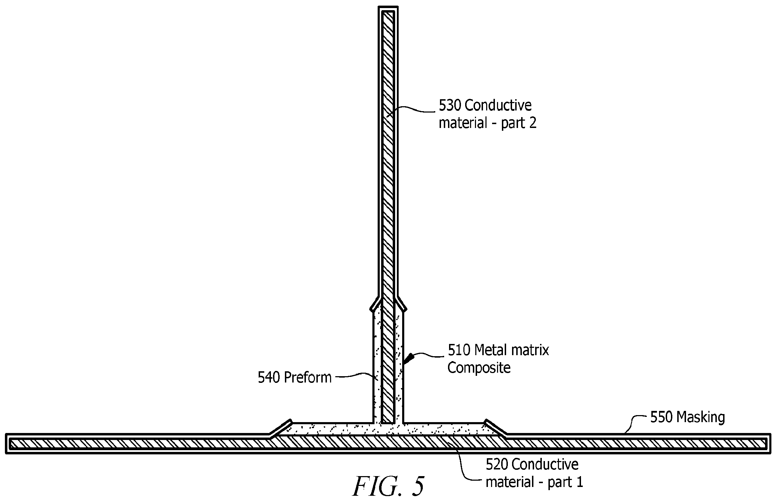

FIGURE 5 illustrates a metal matrix composite 510 of an assembly, according to certain embodiments. The assembly of FIGURE 5 includes two parts, a first part 520 and a second part 530. In certain embodiments, the assembly may include more than two parts. In the illustrated embodiment of FIGURE 5, first part 520 and second part 530 are each made of one or more conductive materials. A preform 540 may be placed between first part 520 and second part 530 to form a basis of a joint. For example, preform 540 may be a woven Pi preform in the shape of an upside down Greek letter Pi. Some embodiments may include more than one preform 540. For example, the assembly may include three parts and two preforms 540.

In certain embodiments, the surfaces of first part 520 and second part 530 are masked at selected locations to prevent plating of the selected locations. For example, in the illustrated embodiment of FIGURE 5, masking 550 is applied to the outer surfaces of first part 520 and second part 530 with the exception of the portions of the surfaces in contact with preform 540. As shown in FIGURE 5, masking 550 is applied to preform 540 to form tapers. Masking 550 may be applied to form any desired contour during processing.

In some embodiments, the assembly including first part 520, second part 530, and woven preform 540 is immersed in a plating medium (e.g., plating medium 260) to initiate plating on the exposed surfaces (e.g., the unmasked surfaces) of first part 520 and second part 530. For example, in the embodiment illustrated in FIGURE 5, plating may begin on the surfaces in contact with preform 540. Plating may proceed until nonconductive fibers 210 of preform 540 are engulfed and a desired thickness of metal matrix composite 510 is achieved. The process ends when the final thickness is reached. At any time in the process, selected surfaces of composite 510 may be masked to control the thicknesses of various features. A voltage may likewise be applied to a part (e.g., part 530) to control the thicknesses of various features. Once the plating process has formed the final joint thickness, the assembly may be removed from the plating medium bath, and the masking 550 and paint may be removed from the assembly. In the illustrated embodiment of FIGURE 5, metal matrix composite 510 forms a Pi-shaped joint with tapered ends.

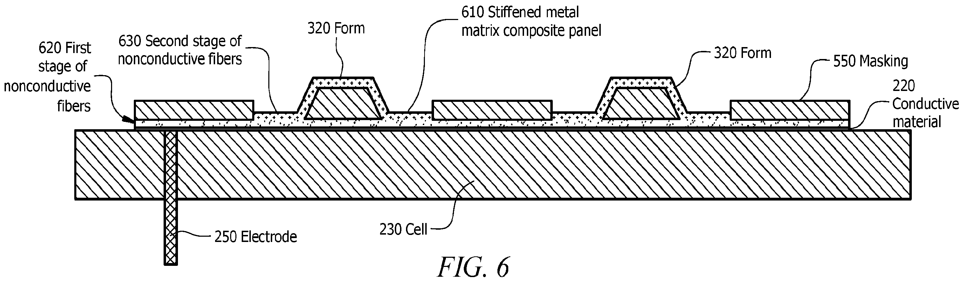

FIGURE 6 illustrates a stiffened metal matrix composite panel 610, according to certain embodiments. In the illustrated embodiment of FIGURE 6, a method of forming metal matrix composite panel 610 includes tooling a surface of cell 230 to a desired contour, wherein cell 230 includes embedded electrode 250. Conductive material 220 (e.g., paint) is applied to the surface of cell 230, and preforms or plies of nonconductive fibers (e.g., nonconductive fibers 210) are placed on conductive material 220. Forms 320 are placed within the preforms or plies of the nonconductive fibers, wherein the outer surfaces of forms 320 are conductive.

In the illustrated embodiment of FIGURE 6, a voltage is applied in a plating medium (e.g., plating medium 260) to begin the electroplating process. The electroplating process continues until a desired portion of the nonconductive fibers are engulfed in metal. For example, the electroplating process may continue until the nonconductive fibers below forms 320 are engulfed in metal, creating a plate like member. After this first stage of nonconductive fibers 620 is processed, masking 550 may be applied to stop matrix growth in selected regions, as shown in FIGURE 6. The second stage of nonconductive fibers 630 and forms 320 may be added after the first stage of nonconductive fibers 620 are entirely engulfed in electroplate. A voltage is applied to begin processing the second stage of nonconductive fibers 630 and continues until the second stage of nonconductive fibers 630 are engulfed in metal, creating stiffened metal matrix composite panel 610. As shown in FIGURE 6, the second stage plating process thickens portions of the plate-like member created in the first stage and also produces composite over forms 320. In certain embodiments, forms 320 may be curved or sloped to sufficiently allow the plating media to reach the first stage of nonconductive fibers 620 in cases where all fibers and forms are assembled at once. Stiffened metal matrix composite panel 610 is then removed from the plating medium bath, conductive material 220 and forms 320 are removed from stiffened metal matrix composite panel 610, and panel 610 is trimmed.

Modifications, additions, or omissions may be made to the methods depicted in FIGURES 1 through 6. The depicted method may include more, fewer, or other steps. For example, method 100 may include contouring the surface of cell 230 to a desired shape (e.g., an aircraft structure). Further, the steps of the depicted method may be performed in parallel or in any suitable order, and any suitable component may perform one or more steps of the depicted method.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, functions, operations, or steps, any of these embodiments may include any combination or permutation of any of the components, elements, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, or component, whether or not it or that particular function is activated, turned on, or unlocked, as long as that apparatus, system, or component is so adapted, arranged, capable, configured, enabled, operable, or operative.

## Claims

1. A method, comprising:
placing nonconductive fibers adjacent to a conductive material;
immersing the nonconductive fibers and the conductive material in a plating medium;
applying a voltage to the conductive material to initiate electroplating; and
engulfing, by electroplating, the nonconductive fibers in metal to create a metal matrix composite.

2. A method, comprising:
placing nonconductive fibers adjacent to a conductive material;
placing a form in the nonconductive fibers;
immersing the nonconductive fibers, the conductive material, and the form in a plating medium;
applying a voltage to the conductive material to initiate electroplating;
engulfing, by electroplating, the nonconductive fibers in metal to create a metal matrix composite; and
removing the form from the metal matrix composite.

3. The method of claim 2, further comprising:
removing the metal matrix composite from the plating medium;
removing the conductive material from the metal matrix composite, wherein the conductive material is paint; and
trimming the metal matrix composite.

4. A metal matrix composite, formed by:
placing nonconductive fibers adjacent to a conductive material;
immersing the nonconductive fibers and the conductive material in a plating medium;
applying a voltage to the conductive material to initiate electroplating; and
engulfing, by electroplating, the nonconductive fibers in metal.

5. The method of claim 1, or the metal matrix composite of claim 4, further comprising:
removing the metal matrix composite from the plating medium;
removing the conductive material from the metal matrix composite, wherein the conductive material is paint; and
trimming the metal matrix composite.

6. The method of claim 1 or of claim 5, or the method of claim 2 or of claim 3, further comprising:
embedding an electrode in a cell; and
applying the conductive material to a surface of the cell, wherein:
the conductive material is paint;
the conductive material is in contact with the electrode; and
applying the voltage to the conductive material comprises applying the voltage to the electrode; or
the metal matrix composite of claim 4 or of claim 5, further formed by:
embedding an electrode in a cell; and
applying the conductive material to a surface of the cell, wherein:
the conductive material is paint;
the conductive material is in contact with the electrode; and
applying the voltage to the conductive material comprises applying the voltage to the electrode.

7. The method of claim 1 or of claim 5 or of claim 6, or the metal matrix composite of claim 4 or of claim 5 or of claim 6, wherein the metal matrix composite comprises a web and a stiffener with a radius between the web and the stiffener.

8. The method of claim 1 or of any of claims 5 to 7, further comprising masking selected regions of the conductive material, wherein:
the conductive material comprises a first part and a second part;
the nonconductive fibers comprise a woven preform;
placing the nonconductive fibers adjacent to the conductive material comprises placing the woven preform between the first part and the second part; and
the created metal matrix composite joins the first part to the second part.

9. The method of claim 1 or of any of claims 5 to 8, or of claim 2 or claim 3, further comprising:
masking a surface of the metal matrix composite; and
applying, after masking the surface of the metal matrix composite, a second voltage to initiate electroplating of an unmasked surface of the metal matrix composite.

10. The method of claim 1 or of any of claims 5 to 8, or of claim 2 or claim 3, wherein the nonconductive fibers are ceramic fibers.

11. The method of claim 2 or of claim 3 or of any preceding claim dependent directly or indirectly from claim 2, wherein the form comprises wax.

12. The metal matrix composite of claim 4 or of any of claims 5 to 7, further formed by masking selected regions of the conductive material, wherein:
the conductive material comprises a first part and a second part;
the nonconductive fibers comprise a woven preform;
placing the nonconductive fibers adjacent to the conductive material comprises placing the woven preform between the first part and the second part; and
the metal matrix composite joins the first part to the second part.

13. The metal matrix composite of claim 4 or of any of claims 5 to 7 or of claim 12, further formed by:
masking a surface of the metal matrix composite; and
applying, after masking the surface of the metal matrix composite, a second voltage to initiate electroplating of an unmasked surface of the metal matrix composite.

14. The metal matrix composite of claim 4 or of any of claims 5 to 7 or of claim 12 or claim 13, wherein the nonconductive fibers are ceramic fibers.
